# DEMANDE DE BREVET EUROPEEN

(11) **EP 1 133 916 A1**
(43) Date de publication de la demande: **19.09.2001**
(21) Numéro de dépôt: 01400674.6
(22) Date de dépôt: 14.03.2001
(51) Int. Cl.: A01J 25/16, A23C 19/064

(54) **Installation de salage à rideaux supérieur et inférieur**

(30) Priorité: 17.03.2000 FR 0003460
(71) Demandeur: EQUIPEMENTS TECHNIQUES DES INDUSTRIES ALIMENTAIRES ET CONNEXES TECNAL, 79000 Niort (FR)
(72) Inventeur: Roumeau, Alain, 17330 Doeuil sur Mignon (FR)
(74) Mandataire: Geismar, Thierry

(57) **Abrégé**

Installation de traitement (1) de préparations alimentaires à l'aide de produits pulvérulents, notamment pour le salage de fromages (6), les produits défilant en continu selon une direction horizontale, comportant un premier bac (20b) comprenant une couche de sel (22) sous forme pulvérulente, des moyens d'alimentation (30b, 31b,32b) en air de soufflage pour créer au moins un nuage (16) de sel dirigé vers le haut, caractérisée en ce qu'elle comprend en outre un second bac (20a) renfermant une couche de sel et disposé au-dessus des préparations (6) qui comprend des moyens d'alimentation (30a, 31a, 32a) en air pour souffler au moins un nuage (15) de sel vers le haut, et des moyens (37) pour dévier ledit nuage (15) vers le bas, l'installation (1) produisant par soufflage au moins deux nuages (15,16) de sel formant rideaux verticaux, au travers desquels sont transférés les préparations (6) à traiter.

## Description

L'invention concerne une installation de distribution de produits pulvérulents, notamment pour le salage de préparations alimentaires tels que des fromages.

On connaît déjà des installations de salage de fromage destinées à obtenir un salage sur les différentes faces des fromages. Ceux-ci sont placés sur des claies convoyées au niveau d'un poste de salage.

Le document FR-2 345 225 décrit un dispositif de dosage et de distribution de produits pulvérulents tel que du sel. Ce document décrit un lit de sel fluidisé, et des moyens de soufflage agencés pour créer une nappe verticale de produits pulvérulents transversale à la direction de déplacement des moyens de transport des claies. L'air de soufflage du sel formant un nuage autour des produits, et l'air de séchage du sel par chauffage, ne sont pas conduits par des moyens distincts en alimentation en air. Ce type de dispositif ne permet pas un réglage indépendant de l'alimentation en air de soufflage et en air de séchage. Par exemple on ne peut pas faire varier facilement l'intensité de salage entre des lots de produits, tout en conservant la même intensité de séchage pourtant appropriée.

Le document FR-2 258 131 décrit une installation de salage comprenant une buse d'injection de sel par le dessous des fromages. Ce type de dispositif, qui n'utilise pas de lit de sel fluidisé, pose des problèmes de corrosion et de colmatage. Compte tenu de l'atmosphère humide sur le poste de salage, le sel qui est transféré dans des conduits tend à former des amas d'où des risques de bouchage.

L'invention vise à palier les inconvénients de l'art antérieur, et à obtenir mécaniquement un salage uniforme des fromages.

L'invention vise à éviter un risque de colmatage et de corrosion de l'installation.

L'invention vise également à obtenir un réglage et un contrôle indépendant de l'alimentation en air de soufflage à l'origine d'un rideau de sel sur les préparations, et de l'alimentation en air de séchage destiné au séchage du sel.

A cet effet, l'invention a pour objet une installation de traitement de préparations alimentaires à l'aide d'un produit pulvérulent, notamment pour le salage de fromages, les préparations défilant en continu selon une direction horizontale, comportant un premier bac de fluidisation situé sous les préparations transférées comprenant une couche de sel sous forme pulvérulente, des moyens d'alimentation en air pour créer au moins un nuage de sel dirigé vers le haut, l'installation comprenant en outre un second bac de fluidisation renfermant une couche de sel, disposé au-dessus des préparations, comportant des moyens d'alimentation en air pour souffler au moins un nuage de sel vers le haut, et des moyens pour dévier ledit nuage vers le bas par le dessus des préparations, l'installation produisant par soufflage au moins deux nuages de sel formant rideaux verticaux, au travers desquels sont transférés les préparations à traiter.

Les moyens d'alimentation en air de soufflage comprennent au moins une rampe équipée de buses de soufflage orientées vers le haut, positionnées sous le niveau du lit fluidisé, et projetant le produit pulvérulents recouvrant leur orifice vers le haut, chaque rampe disposée transversalement au déplacement des préparations à traiter générant un rideau de produit pulvérulent traversé par les préparations.

Au moins l'un des bacs inférieur ou supérieur comprend des moyens d'alimentation en air de séchage du sel, et des moyens d'alimentation en air de soufflage distincts et réglables indépendamment des moyens d'alimentation en air de séchage.

Selon une réalisation, les moyens d'alimentation en air de soufflage comprennent des moyens de ventilation, des moyens de réglage, des moyens de contrôle du débit d'air.

Les moyens d'alimentation en air de séchage comprennent des moyens de ventilation conduisant l'air de séchage à travers la cloison horizontale perméable à l'air sur laquelle est disposé le produit pulvérulent.

Le rideau supérieur est décalé ou à l'aplomb du rideau inférieur de produit pulvérulent.

Selon une réalisation, les bacs de fluidisation comprennent un trop plein de lit fluidisé, le sel évacué étant récupéré dans un bac inférieur de récupération relié par des moyens de transfert refoulant le produit pulvérulent dans le bac de fluidisation supérieur, et dans le bac de fluidisation inférieur.

Les moyens d'alimentation en air de soufflage et les moyens d'alimentation en air de séchage sont partagés ou distincts pour les deux bacs de fluidisation.

Les moyens de déviation du flux de produit pulvérulent du bac supérieur comprennent selon une réalisation une cloison déviant le produit pulvérulent vers le bas.

L'installation comprend selon une réalisation une enceinte formant tunnel pour les bacs de fluidisation supérieur et inférieur, des moyens de transport des préparations disposés de manière à ne pas gêner le passage des rideaux de produit pulvérulent, et traversant l'enceinte, et un dispositif de soufflage amont avant l'entrée dans le tunnel régulant les traces extérieurs d'humidité.

D'autres objets et avantages de l'invention seront bien compris à l'aide des figures annexées dans lesquelles :
- la figure 1 représente schématiquement le fonctionnement d'un bac de fluidisation permettant la génération d'un rideau de sel.
- la figure 2 représente une vue schématique de l'installation comprenant un bac de fluidisation supérieur et un bac de fluidisation inférieur.

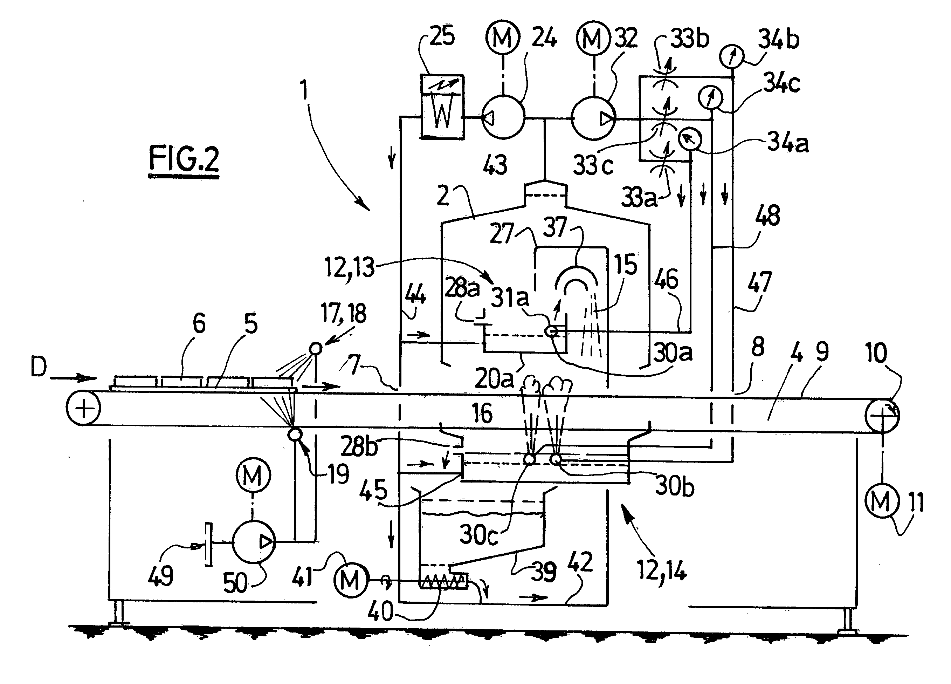

L'installation 1 représentée en figure 2 comprend un tunnel 2 traversé par un système de transport 4 de claies 5 de support de fromages 6. Les claies 5 sont convoyées selon une direction horizontale D, arrivant par une entrée 7 dans le tunnel 2 et en sortant par une sortie 8. Le système de transport 4 comprend des courroies 9 disposées écartées sous les claies convoyées de façon à ne pas gêner le soufflage du produit qui sera décrit plus loin, les courroies 9 étant entraînées par poulie 10 et à vitesse ajustable à l'aide d'une motorisation 11.

Le tunnel 2 est destiné à confiner deux systèmes de salage 12, dont un système supérieur 13 et un système inférieur 14. Ces systèmes de salage 13,14 sont agencés pour traiter toutes les faces des préparations alimentaires, en l'occurrence fromagère, en un seul passage. Ces systèmes 13, 14 permettent de saler mécaniquement avec un sel calibré des préparations présentant un taux d'humidité requis, sur toutes les faces.

Les systèmes supérieur 13 et inférieur 14 sont situés respectivement au-dessus et en dessous des claies convoyées 5. Le système 13 est destiné au traitement essentiellement de la face supérieure et du haut des faces latérales des fromages 6, le système 14 est destiné au traitement essentiellement de la face inférieure et du bas des faces latérales des fromages 6.

La machine 1 produit par soufflage à l'aide du système 13 au moins un nuage 15, et à l'aide du système 14 au moins un nuage 16, de sel calibré, les nuages 15,16 formant des rideaux verticaux, au travers desquels sont transférées les claies 5 grillagée portant les fromages 6 à saler. Les rideaux 15, 16 sont disposés transversalement à la direction de transfert D. L'humidité des préparations capte les grains de sel lors du passage.

Par ailleurs, la machine 1 est posée au sol, dans un local sec et propre. Le chargement et le déchargement des claies 5, peuvent être réalisés manuellement. La machine peut également être intégrée dans une ligne de fabrication entièrement mécanisée. L'alimentation en sel sec calibré peut être faite manuellement ou par transfert mécanisé.

On décrit ici le principe de fonctionnement et la structure de chacun des systèmes 13, 14 pour une opération de salage de fromages. On décrit la structure et le principe de fonctionnement du système 14, étant entendu que le principe de fonctionnement est analogue pour le système 13 en dehors des moyens de déviation qui seront décrits pour le système supérieur 13.

Le système 14 comprend un bac de fluidisation 20 à fond horizontal, ouvert vers le haut, séparé dans le sens de la hauteur par une cloison horizontale 21 perméable à l'air, sur laquelle est déposé le produit pulvérulent à distribuer 22, formant avec le fond du bac 20 un caisson 23. Le caisson 23 est alimenté par un ventilateur 24 en air de séchage du sel.

L'air de séchage refoulé par le ventilateur 24 est chauffé à l'aide de moyens de chauffage du type résistances 25, cet air est conduit dans le caisson 23, et grâce à la perméabilité de la cloison poreuse 21 sèche le sel 22. Le sel 22 est ainsi mis sous forme de lit fluidisé 26 par l'air refoulé par le ventilateur 24 et traversant la cloison 21.

Le niveau de lit fluidisé est rendu constant par une alimentation permanente en produit par un moyen d'amenée 27, une fuite permanente par un orifice 28, et tranquillisé par une optimisation des débits, de la pression et de la température de l'air insufflé dans le caisson 23.

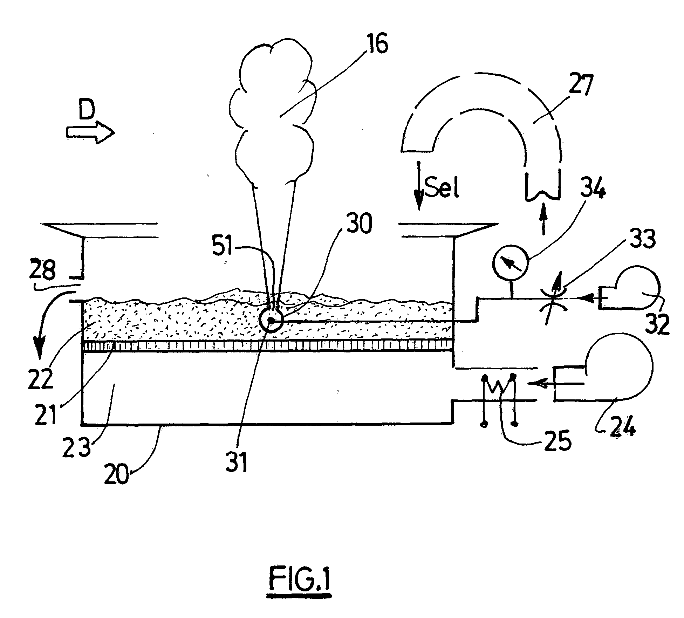

Le système 14 comprend en outre des moyens d'alimentation 29 en air de soufflage. Ces moyens d'alimentation 29 comprennent au moins une rampe 30 équipée d'au moins une buse 31 de soufflage. Le soufflage est orienté sensiblement verticalement vers le haut, les buses 31 étant positionnées sous le niveau du lit fluidisé, et projetant le sel pulvérulent recouvrant leurs orifices 51, vers le haut. Comme représenté en figure 1, la rampe 30 est disposée transversalement au déplacement des préparations 6 à traiter, afin de générer le rideau 16 de sel pulvérulent. La rampe 30 est alimentée en air de soufflage à l'aide d'un ventilateur 32, les moyens de soufflage 29 comprennent en outre une vanne de réglage 33, et un manomètre de contrôle 34.

L'ouverture de la vanne de réglage 33 augmente le débit éjecté par les buses 31, donc la quantité de produit pulvérulent distribué vers les préparations. Le manomètre 34 permet de repérer les positions de réglage de la vanne 33.

Dans la réalisation représentée, l'amplitude du réglage est augmentée par la variation du niveau du lit fluidisé réglable en continu et repérable sur réglet pour identifier le point de fonctionnement.

Les moyens d'alimentation en air de séchage 24 sont distincts des moyens d'alimentation en air de soufflage 29, le circuit de l'air de soufflage est distinct du circuit de l'air de séchage, ce qui permet un contrôle et un réglage de chacun d'eux indépendamment. Par exemple, lorsque le taux d'humidité est particulièrement élevé, on peut augmenter l'intensité de séchage en augmentant l'alimentation en air de séchage, tout en maintenant constante l'alimentation en air de soufflage autrement dit l'intensité de salage. Inversement, on peut souhaiter pour un même débit d'air de séchage, faire varier la quantité de sel projetée contre les fromages.

L'installation 1 représentée en figure 2 comprend un système 13 supérieur et un système 14 inférieur. Le système supérieur 13 fonctionne de manière analogue au système inférieur 14 mais il comprend en outre un moyen de déviation tel qu'une paroi 37 à concavité vers le haut, déviant le flux supérieur 15 vers le bas qui forme le rideau supérieur de sel, l'orientant vers la claie 5 transférée. De plus pour une bonne déviation, le jet de sel issu des buses 31a de la rampe 30a est suffisamment incliné vers la paroi 37 par rapport à la verticale. Le rideau 15 ainsi formé vient saler le dessus et les faces latérales supérieures des fromages 6.

On a représenté une réalisation avec une paroi 37 en arc de cercle située du côté de la sortie 8. D'autres réalisations sont envisageables en faisant varier le nombre et la forme des parois 37. Par exemple l'installation comprend deux parois 37, une du côté de l'entrée 7 et une autre du côté de la sortie 8.

Par ailleurs dans la réalisation de la figure 2, le bac de fluidisation 20a du système supérieur 13 est de dimensions inférieure à celles du bac 20b du système 14, de manière que le sel qui traverse le système de transport 4 retombe dans le bac de fluidisation 20b.

Du fait de la disposition transversale des buses, l'ensemble des buses crée un rideau vertical transversal supérieur et un rideau transversal inférieur, les fromages sont salés en un seul passage sur toutes leurs faces, le sel restant collé du fait de l'humidité sur les fromages.

Dans cette réalisation, les moyens de séchage sont partagés entre le bac supérieur 20a et le bac inférieur 20b. Le ventilateur d'air de séchage 24 conduit l'air de séchage par une canalisation 44 au bac de fluidisation 20a et par une canalisation 45 au bac de ventilation 20b. De même, les moyens d'alimentation en aire de soufflage sont partagés entre les bacs 20a,20b. Le ventilateur d'air de soufflage 32 conduit l'air de soufflage à une rampe 30a du bac 20a, par l'intermédiaire d'une canalisation 46, et conduit l'air de soufflage vers deux rampes 30b, 30c au bac 20b à l'aide de deux canalisations 47, 48 respectivement.

Dans cette réalisation, les moyens de réglage 33 sont indépendants et propres à chaque système 13,14. L'installation comprend une vanne de réglage 33a pour la rampe 30a du bac supérieur 20a, et deux vannes 33b, 33c respectivement pour les rampes 30b, 30c du bac inférieur 20b.

D'autres variantes de réalisation peuvent être effectuées en restant dans le cadre de l'invention, en faisant varier notamment le nombre et la position de différents éléments, par exemple les rampes utilisées, le type de dispositif de ventilation de séchage et de soufflage.

Par exemple, les ventilateurs d'alimentation en air de séchage pour générer le lit fluidisé peuvent être propres à chaque système 13, 14. Par ailleurs le nombre de rideaux est modulable : sur la figure 2, on a représenté deux rideaux inférieurs 16, ce nombre est variable selon la précision de salage souhaitée notamment, sachant que l'on obtient en tout cas au moins un rideau supérieur 20a par le dessus et au moins un rideau inférieur 20b par le dessous

Dans la réalisation représentée, des moyens d'alimentation 27 en sel alimentent le bac supérieur 20a dont le trop plein permet également d'alimenter le bac inférieur 20b. Dans d'autres réalisations, les alimentations sont distinctes. On peut également faire varier le nombre de buses par rampe et on peut obtenir un salage différent des fromages selon leur position sur la claie 5 par exemple en faisant varier la taille de l'orifice des buses selon leur position sur la rampe. En outre la direction de transfert représentée est horizontale pour une optimisation du salage. D'autres réalisations moins performantes pourraient être réalisées avec une direction inclinée.

L'alimentation en produit est réalisée à partir d'une trémie 39 chargée manuellement ou automatiquement à la base de laquelle une vis sans fin 40 ou dispositif analogue, motorisée à vitesse ajustable par un moteur 41, régule la sortie du sel vers une tuyauterie de transport pneumatique 42 raccordée sur le circuit d'air du ventilateur 24 et refoulant le sel dans le bac de fluidisation supérieur 20a. Ce bac 20a déborde par l'orifice 28a dans le bac de fluidisation inférieur 20b qui déborde par l'orifice 28b dans la trémie 39.

Les deux systèmes 13,14 sont confinés dans le tunnel 2 au sommet duquel sont implantés les ventilateurs 24,32 avec un filtre 43 sur leur aspiration. En outre, dans la réalisation représentée en figure 2, un dispositif de soufflage 17 amont est disposé avant le tunnel 2, ayant pour but de réguler des traces extérieures d'humidité, constitué par une rampe supérieure 18 et une rampe inférieure 19 de générant des lames d'air alimentées en air ambiant, au travers d'un filtre 49 par un ventilateur 50.

## Revendications

1. Installation de traitement (1) de préparations alimentaires à l'aide d'un produit pulvérulent, notamment pour le salage de fromages (6), les préparations défilant en continu selon une direction horizontale, comportant un premier bac (20b) de fluidisation situé sous les préparations fromagères comprenant une couche de sel (22) sous forme pulvérulente, des moyens d'alimentation (30b, 31b,32b) en air de soufflage pour créer au moins un nuage (16) de sel dirigé vers le haut, **caractérisée en ce qu'**elle comprend en outre un second bac (20a) de fluidisation renfermant une couche de sel, disposé au-dessus des préparations (6), comportant des moyens d'alimentation (30a, 31a, 32a) en air pour souffler au moins un nuage (15) de sel vers le haut, et des moyens (37) pour dévier ledit nuage (15) vers le bas par le dessus des préparations, l'installation (1) produisant par soufflage au moins deux nuages (15,16) de sel formant rideaux verticaux, au travers desquels sont transférés les préparations (6) à traiter.

2. Installation selon la revendication 1 **caractérisée en ce que** les moyens d'alimentation (32) en air de soufflage comprennent au moins une rampe (30) équipée de buses (31) de soufflage orientées vers le haut, positionnées sous le niveau du lit fluidisé, et projetant le produit pulvérulent recouvrant leur orifice (51) vers le haut, chaque rampe (30) disposée transversalement au déplacement des préparations à traiter générant un rideau (15, 16) de produit pulvérulent traversé par les préparations.

3. Installation selon la revendication 1 ou 2 **caractérisée en ce que** au moins l'un des bacs inférieur (20b) ou supérieur (20a) comprend des moyens d'alimentation (24) en air de séchage du sel (22), et des moyens d'alimentation (32) en air de soufflage distincts et réglables indépendamment des moyens d'alimentation (24) en air de séchage.

4. Installation selon l'une quelconque des revendications 1 à 3 **caractérisée en ce que** les moyens d'alimentation en air de soufflage comprennent des moyens de ventilation (32), des moyens de réglage (33), des moyens de contrôle (34) du débit d'air.

5. Installation selon l'une quelconque des revendications 1 à 4 **caractérisée en ce que** les moyens d'alimentation en air de séchage comprennent des moyens de ventilation (24) conduisant l'air de séchage à travers une cloison (21) horizontale perméable à l'air sur laquelle est disposé le produit pulvérulent.

6. Installation selon l'une quelconque des revendications 1 à 5 **caractérisée en ce que** le rideau supérieur (15) est décalé ou à l'aplomb du rideau inférieur (16) de produit pulvérulent.

7. Installation selon l'une quelconque des revendications 1 à 6 **caractérisée en ce que** les bacs (20a, 20b) de produit comprennent un trop plein de lit fluidisé, le sel évacué étant récupéré dans un bac inférieur de récupération (39) relié par des moyens de transfert refoulant le produit pulvérulent dans le bac de fluidisation supérieur, et dans le bac de fluidisation inférieur.

8. Installation selon l'une quelconque des revendications 1 à 7 **caractérisée en ce que** les moyens d'alimentation (32) en air de soufflage et les moyens d'alimentation (24) en air de séchage sont partagés ou distincts pour les deux bacs de fluidisation (20a,20b).

9. Installation selon l'une quelconque des revendications 1 à 8 **caractérisée en ce que** les moyens de déviation du flux de produit pulvérulent du bac supérieur (20a) comprennent une cloison (37) déviant le produit pulvérulent vers le bas.

10. Installation selon les revendications 1 à 9 **caractérisée en ce qu'**elle comprend une enceinte formant tunnel (2) pour les bacs de fluidisation supérieur et inférieur, des moyens de transport (4) des préparations disposés de manière à ne pas gêner le passage des rideaux de produit pulvérulent, et traversant l'enceinte, et un dispositif de soufflage amont avant l'entrée dans le tunnel régulant les traces extérieures d'humidité.
